# EUROPEAN PATENT APPLICATION

(11) **EP 1 132 356 A1**
(43) Date of publication of application: **12.09.2001**
(21) Application number: 00301921.3
(22) Date of filing: 09.03.2000
(51) Int. Cl.: C04B 28/18, C09K 21/02

(54) **High temperature insulation product based on calcium silicate**

(71) Applicant: Cape Calsil Systems Limited, Uxbridge, Middlesex, UB8 2JQ (GB)
(72) Inventor: Townson, Michael, Clackmannanshire, Scotland FK10 1DR (GB); Cliff, David, Dorking, Surrey RH4 3BX (GB)
(74) Representative: Hallybone, Huw George

(57) **Abstract**

The invention provides a product comprising a calcium silicate matrix and from 5 to 50 % by weight, based on the total product, of rutile titanium dioxide having a mean particle size in the range 1.5 to 15 microns. The calcium silicate matrix may be amorphous, tobermorite or xonotlite, and the product may contain reinforcing fibres, e.g. cellulose fibres, and/or particulate materials such as mica, wollastonite and vermiculite. The products may be used for high temperature insulation and fire protection applications, and are dimensionally stable at high temperatures and have low thermal conductivities.

## Description

This invention relates to insulation products based on calcium silicate. It is especially concerned with the production of a high temperature insulation product or a fire protection product having improved insulation properties.

It has long been known in the construction and related industries to use insulating products and fire protection products based on calcium silicate. Such products have traditionally been made by the hydrothermal reaction of a calcareous material (e.g. lime) and a siliceous material (e.g. silica) in an autoclave, the molar ratios of the calcareous material to the siliceous material, the autoclaving conditions, and the use of additives being varied to give products suitable for a wide range of applications. Thus, in a typical production process an aqueous slurry of lime and silica is converted to hydrated calcium silicate by reaction in a stirred autoclave. Additives such as reinforcing fibres and inert fillers may optionally be added to the slurry, which is then transferred to a forming machine such as a filter press, a Hatschek machine or a Magnani machine, to form it into shape and dewater it. The formed product is then dried, and is useful in the formation of thermal insulation boards, pipe insulation, building boards and cladding panels. It can further be used in the fire protection of steel work, ducts and electric cables, for example. Depending on the molar ratio of the raw materials, and the hydrothermal reaction conditions, the calcium silicate which forms the matrix of the product may be amorphous or have the crystalline form of tobermorite or xonotlite, for example. The products may be in board, block, pipe-sections or other shaped form, depending upon the application for which they are intended.

The industry is constantly making efforts to improve such insulating and fire resistance products. For many years asbestos fibres were incorporated in such products to enhance the insulating and fire protection characteristics of the products. Due to health hazards attendant upon its use, asbestos is no longer considered for incorporation into insulating and fire protection products. Alternatives have been sought, and for example the combination of cellulosic fibres with finely divided mica and/or vermiculite has been used with substantial success as an "asbestos replacement".

Improvements are still sought, however, and it is an object of the present invention to provide a heat insulating and fire protection product, based on a calcium silicate matrix, which has superior properties.

According to the present invention such a product comprises a calcium silicate matrix and from 5 to 50% by weight, based on the weight of the product, of rutile titanium dioxide having a mean particle size in the range 1.5 to 15 microns (as measured by the laser sizing technique).

Suitably the rutile is present in the product in an amount of 10 to 40% by weight of the product, preferably in an amount of 20 to 30% on the same basis. The rutile preferably has a mean particle size in the range 3 to 10 microns, most preferably 3.5 to 4.5 microns. The calcium silicate in the matrix may be amorphous or have the crystal structure of tobermorite or xonotlite, or may comprise a combination of these forms.

The products of the invention may contain other ingredients in addition to the calcium silicate and rutile. For example, fibrous reinforcing materials may be incorporated into the product, examples of such materials being cellulose fibres, glass fibres, ceramic fibres, mineral fibres, carbon fibres and synthetic organic fibres. Such fibrous reinforcement may be present in an amount up to 15% by weight, based on the final product. Preferably any fibrous reinforcement is present in an amount of 3% to 7% by weight, based on the final product.

The products may also contain other additives, for example to enhance their fire resistant properties and/or to adjust their density. Such additives may include, for example, finely divided mica, wollastonite, vermiculite, perlite, clay and other fillers. Such materials may be present in amounts up to 60% by weight of the final product, preferably in an amount of 5% to 50% by weight of the product.

The raw material slurry used to produce the products of the invention may contain dispersing agents to assist the dispersion of the rutile.

The products of the invention may be made by a pre-autoclaving process and/or by a post-autoclaving process. In the former, an aqueous slurry of calcareous and siliceous materials may be converted to hydrated calcium silicate by reaction in a stirred autoclave at temperatures above 150°C under saturated steam conditions. To this slurry is added rutile and any other fibrous, particulate or other additives, and the resulting material is formed into shape, dewatered and dried. Alternatively, an aqueous slurry of calcareous and siliceous raw materials, together with the rutile and any fibrous or non-fibrous additives, may be formed into shape, dewatered and then subjected to autoclaving at temperatures above 150°C under saturated steam conditions. Other known methods of making calcium silicate matrices, e.g. methods involving active silicates such as sodium silicate and a calcareous material such as calcium chloride or lime, may also be used.

The products of the invention may be made at densities in the range 100 to 1000 kg/m³._{,} by suitable adjustment of the production conditions and ingredients.

The following Examples are given for the purpose of illustrating the invention.

### Comparative Example

An aqueous slurry of lime and silica in the molar ratio CaO:SiO₂ of 0.96 was converted to hydrated calcium silicate by reaction in a stirred autoclave for 3 ½ hours at temperatures above 200°C under saturated steam conditions. To the formed slurry was added 4.2 % by weight (based on the dry finished product) of cellulose fibres, and the resulting material was transferred to a mold and the water removed by pressing. After drying, the resulting board product had a density of 260 kg/m³ and a thermal conductivity of 0.083 W/mK at 400°C, 0.096 W/mK at 600°C and 0.134 W/mK at 800°C.

### Example 1

The procedure of the Comparative Example was repeated, with the difference that to the calcium silicate slurry was also added 20% rutile (by weight based on the dry finished product) having a mean particle size of 4 microns, as measured by laser sizer techniques.

The finished board product had a similar density to that produced in the Comparative Example, but thermal conductivity figures of 0.083 W/mK at 400°C, 0.092 W/mK at 600°C and 0.121 W/mK at 800°C. These thermal conductivity figures illustrate the significant superiority of the board containing rutile, and it was also noticed that the thermal conductivity was much flatter than that of the Comparative Example when plotted against increasing operating temperature.

### Example 2

Example 1 was repeated, but with the addition of 10% by weight rutile (instead of 20%). The thermal conductivity figures of the product were 0.084 W/mK at 400°C, 0.094 W/mK at 600°C, and 0.129 W/mK at 800°C.

### Example 3

Example 1 was repeated, but with the addition of 30% by weight rutile. The thermal conductivity figures of the product were 0.081 W/mK at 400°C, 0.087 W/mK at 600°C, and 0.106 W/mK at 800°C.

### Example 4

Example 1 was repeated, with the difference that a dispersant, DISPEX N40, was included in the mixture, in an amount of 1% by weight based on the weight of rutile. The thermal conductivity figures of the product were 0.082 W/mK at 400°C, 0.084 W/mK at 600°C, and 0.109 W/mK at 800°C.

### Example 5

Example 1 was repeated, with the difference that 30% by weight rutile was added, the rutile having a mean particle size (by the laser sizing technique) of 15 microns. The thermal conductivity figures of the product were 0.095 W/mK at 400°C, 0.102 W/mK at 600°C, and 0.124 W/mK at 800°C.

It will be seen that all the products of the Examples had high dimensional stability at the high temperatures at which they are proposed to be used for thermal insulation and fire protection, while at the same time having very low thermal conductivity.

## Claims

1. A thermal insulating and fire protection product comprising a calcium silicate matrix and from 5 to 50 % by weight, based on the total product, of rutile titanium dioxide having a mean particle size in the range 1.5 to 15 microns (as measured by the laser sizing technique).

2. A product as claimed in claim 1 wherein the rutile titanium dioxide is present in an amount 10 to 40 % by weight based on the total product.

3. A product as claimed in claim 2 wherein the rutile titanium dioxide is present in an amount of 20 to 30 % by weight based on the total product.

4. A product as claimed in any of claims 1 to 3 wherein the rutile titanium dioxide has a mean particle size in the range 3.5 to 4.5 microns.

5. A product as claimed in any of claims 1 to 4 wherein the calcium silicate matrix is amorphous or has the crystal structure of tobermorite or xonotlite, or comprises a combination thereof.

6. A product as claimed in any of claims 1 to 5, containing also reinforcing fibres.

7. A product as claimed in claim 6, wherein the reinforcing fibres comprise cellulose fibres, glass fibres, ceramic fibres, mineral fibres, carbon fibres or synthetic organic fibres.

8. A product as claimed in any of claims 1 to 7, containing also finely divided mica, wollastonite, vermiculite, perlite, clay or other filler.

9. A product as claimed in any of claims 1 to 8, having a density in the range 100 - 1000 kg/m³.
